# EUROPÄISCHE PATENTSCHRIFT

(11) **EP 1 070 581 B1**
(45) Veröffentlichungstag und Bekanntmachung des Hinweises auf die Patenterteilung: **17.07.2002**
(21) Anmeldenummer: 00109333.5
(22) Anmeldetag: 02.05.2000
(51) Int. Cl.: B32B 5/18, B32B 21/08, E04B 1/61, E04B 1/74

(54) **Mehrschichtdämmelement**
Laminated insulating element
Elément isolant stratifié

(30) Priorität: 22.07.1999 DE 19934372
(43) Veröffentlichungstag der Anmeldung: 24.01.2001
(73) Patentinhaber: Brohlburg, Guido, 56626 Andernach (DE)
(72) Erfinder: Brohlburg, Guido, 56626 Andernach (DE)
(74) Vertreter: Zellentin, Wiger, Dipl.-Ing.

(56) Entgegenhaltungen:
- DE-A- 2 751 112
- DE-A- 3 235 252
- DE-U- 7 408 307
- DE-U- 8 108 172

## Beschreibung

Die vorliegende Erfindung betrifft ein Mehrschichtdämmelement, d.h. eine "Sandwich"-Platte für Bauzwecke, bestehend aus einem beidseitig mit einer Holzauflage (Hartfaserplatte) beschichteten Hartschaumkern (Polystyrol). Derartige Platten werden vornehmlich zur Dachisolierung verwendet. Dabei können die Faserplatten mit einer Nut-Federverbindung ausgestattet sein, die den Hartschaumkern gegen äußere Einflüsse abschließt.

Solche Sandwichplatten finden sich im Stand der Technik z.B. als Verbundplatte zum Brandschutz (DE 295 16 871 U1) in der DE 25 18 174 A1, die in einer im Hartschaumkern umlaufenden Nut liegende Riegel zum Verbinden verwendet. Eine andere Sandwichplatte ist in der DE 195 09 972 gezeigt, die jedoch dem Bau von Fahrzeuggehäusen dient, die jedoch Bauzwecken nicht dienen kann. Ebenso bezieht sich das DE-G 88 17 152.3 auf den Fahrzeugbau, hier wird der Kraftfluß aneinanderstoßender Platten über eingeklebte Streifen sichergestellt.

Nachteilig ist, daß die Belastbarkeit der Stöße nur gering ist, d.h. diese müssen bei Dachverlegung sorgfältig auf die Sparren abgestimmt werden, da sie sich unter Krafteinwirkung sofort öffnen und somit bei Verlegung der Stöße neben den Sparren keinesfalls freitragend sind.

Weiterhin müssen Nut und Feder sehr präzise gefertigt sein und auch die Verlegung mit großer Sorgfalt erfolgen, um die geforderte Dichtigkeit gegen Wasser zu gewährleisten.

Die vorliegende Erfindung hat sich daher die Aufgabe gestellt, ein Dämmelement der eingangs genannten Art dahingehend zu verbessern, daß ihre Tragfähigkeit erhöht wird und daß an der Präzision der Nut- und Federverbindung und der Verlegung geringere Anforderungen bei gesteigerter Dichtigkeit zu stellen sind, was letztlich die Baukosten senkt.

Die Lösung dieser Aufgabe gelingt bei einem Mehrschichtdämmelement, das die Merkmale des Hauptanspruchs aufweist. Vorteilhafte Ausgestaltungen sind Gegenstand der Unteransprüche.

Auf diese Weise wird eine Nut-Federverbindung über den Hartschaumkern selbst mit den ihn abdeckenden Holzplatten geschaffen. Ein solcher Verbund ist bei entsprechender Dimensionierung eigenstabil, so daß die Verlegung nicht mehr dergestalt erfolgen muß, daß die (senkrecht verlaufenden) Stöße auf den Sparren liegen. Gleichzeitig ist natürlich auch das Verlegen selbst leichter, da die relativ großvolumige Verbindung die gegenseitigen Platten exakt führt.

Die Erfindung geht dabei von der Erkenntnis aus, daß zum Einführen der Feder des Schaumstoffkerns in die Nutflanken der Nachbarplatte es nicht ausreicht, lediglich stumpfe Überstände vorzusehen. Polystyrol besitzt gegenüber den Faserplatten eine hohe Reibung, so daß eine verhältnismäßig lange Abschrägung erforderlich wäre, die dem ebenen und damit tragenden Bereich des Überstandes abgeht. Verwendet man jedoch, wie erfindungsgemäß vorgesehen, eine zu den Platten parallel verlaufende Schlitzung, die durch die Einschnitte in die Überstände hergestellt ist, so können die darüber und darunter liegenden Teile des Überstandes beim Einschieben einfedern, erleiden jedoch hinsichtlich der Tragfähigkeit des Verbundes keine wesentliche Einschränkung, da auch hierbei der Kern selbst Kräfte aufzunehmen in der Lage ist. Lasten von über 100 kg können bei üblichen Dächern und mittig zwischen den Sparren liegendem Stoß ohne weiteres aufgenommen werden. Insbesondere weist der Kern zwei Einschnitte auf, die gegenüber der Mitte des Kerns zu den Überständen hin versetzt sind. Diese können natürlich relativ schmal sein.

Insbesondere sind erfindungsgemäß auch die Holzplatten in an sich bekannter Weise als Nut- und Federplatten ausgebildet, so daß über diese ein doppelter Verbund erzielt wird, der eine gegenüber dem Stand der Technik wesentlich verbesserte Schlagregensicherheit, Luft- und Winddichte und eine überraschend hohe Belastbarkeit des Verbundes ergibt. Da der Polystyrolkern als erster zwischen die Holzplatten des Nachbarteils eingeführt wird, wird so ein sauberes Fluchten der Federn mit den Nuten der Holzplatten erzielt, so daß sie einfach und störungsfrei ineinandergeschoben werden können. Durch die zusätzliche Überlappung mit den Überständen/Rücksprüngen der Mehrschichtdämmelemente wird naturgemäß eine gesteigerte Dichtigkeit erzielt, bzw. kann die Nut-Federverbindung relativ einfach mit entsprechenden Toleranzen sein, durch die erfindungsgemäß bewirkte Führung sind natürlich auch Nuten und Federn bei der Verlegung wesentlich besser geschützt.

Um eine gute Federwirkung zu erzielen, ist die Einschnittiefe vorzugsweise größer als der Überstand des Kernes über die Plattenvorderkanten.

Für die Zwecke von Dachisolierungen haben sich folgende Abmessungen als besonders zweckmäßig erwiesen: die Stirnflächen zwischen den Einschnitten und den Abschrägungen sind etwa 10 mm breit, woran sich die Abschrägung unter einem Winkel von etwa 45° anschließt. Die Breite des Überstandes ist dabei etwa 20 mm und die Einschnittiefe etwa 30 mm, bei einer Einschnittöffnung von etwa 5 mm, wobei die Holzplatten wie üblich eine Stärke von z.B. 16 mm aufweisen.

Die Einschnitte ermöglichen somit eine relativ steile Anfasung, die dennoch einen präzisen und kraftfreien Einschub der Elemente ineinander erlaubt, wodurch natürlich auch verhältnismäßig große tragende Flächen an den Ober- und Unterseiten der Überstände erhalten werden.

Bei Verwendung von zwei Einschnitten entsteht zwischen diesen ein Distanzstück, welches bei einer Stärke der Hartschaumplatte von 80 mm 30 mm und bei einer solchen des Kerns von 200 mm 150 mm betragen kann.

Die Holzplatten sind mit dem Kern durch einen diffusionsoffenen Kleber (Dispersionskleber) verbunden, dieser kann grundsätzlich auch dazu verwendet werden, die Überstände mit den Holzplatten der Nachbareinheit zu verbinden.

Die Holzplatten selbst sind dabei vorzugsweise mitteldichte Faserplatten (MDF).

Anhand der beiliegenden Figuren wird die vorliegende Erfindung an einem Ausführungsbeispiel erläutert.
Dabei zeigen
- **Figur 1**: in dreidimensionaler Darstellung des Stoß zweier Platten,
- **Figur 2**: eine Platte in Stirnansicht und
- **Figur 3**: eine Ausbildung mit Nut-Federverbindung der Holzauflagen.

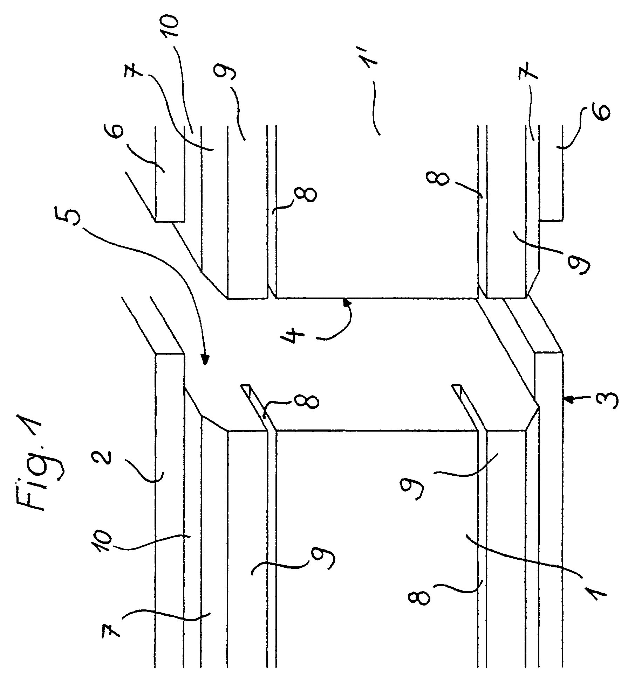

**Figur 1** zeigt zwei plattenförmige Mehrschichtdämmelemente mit ihren Kernen 1, 1' aus insbesondere Schaumpolystyrol und die diese abdeckenden Holzauflagen 2, 3.

Der Kern 1 steht an zwei aneinanderstoßenden Seiten über die Holzauflagen über (Überstand 4 z.B. ca. 20 mm bei Verwendung für Dachisolierungen), an den beiden anderen Kanten ist ein Rücksprung ausgebildet, in den der Überstand 4 eingepaßt werden kann, um beide Platten miteinander zu verbinden.

Oben und unten besitzen die Überstände 4 Abschrägungen 7 und neben diesen Einschnitte 8, die vorzugsweise tiefer eingefräst sind, als der Überstand 4 gegenüber den Kanten 6 der Holzauflagen 2, 3 ausmacht.
Die Abschrägungen 7 erleichtern des Einschub des Überstandes 4 in den Rücksprung 5, wobei diese über die Einschnitte 8 zurückfedern können. Dabei entsteht eine Nut-Federverbindung über die gesamten Querschnitte, welche die Tragfähigkeit der Verbindung deutlich erhöht, der Verbund wird freitragend. Für den oben genannten typischen Anwendungsfall sind die Stirnflächen 9 ebenso wie die oberen und unteren Kontaktflächen 10 etwa 10 mm breit, die Abschrägungen 7 schließen unter einem relativ steilen Winkel von 45° an, wobei der Gesamtüberstand etwa 20 mm bei einer Tiefe der Einschnitte 8 von etwa 30 mm beträgt, um die Federwirkung ausreichend groß zu gestalten. Die Auflagen 2, 3 können äquivalent aus einem anderen Material bestehen, Holzfaserplatten sind jedoch der Regelanwendungsfall bei der Wärmedämmung von Gebäuden.

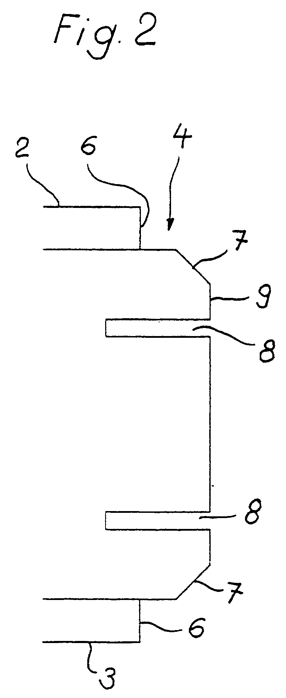

**Figur 2** zeigt das erfindungsgemäße Mehrschichtdämmelement in Stirnansicht. Dargestellt sind der Überstand 4 gegenüber den Kanten 6 der Holzauflagen 2, 3, die Abschrägungen 7 sowie die Stirnflächen 9 (die beide vorteilhaft gleich groß sind). Zwischen den Einschnitten 8, die bis hinter die Kanten 6 reichen, befindet sich ein Distanzstück, daß bei größeren Plattenstärken entsprechend größer gewählt ist.

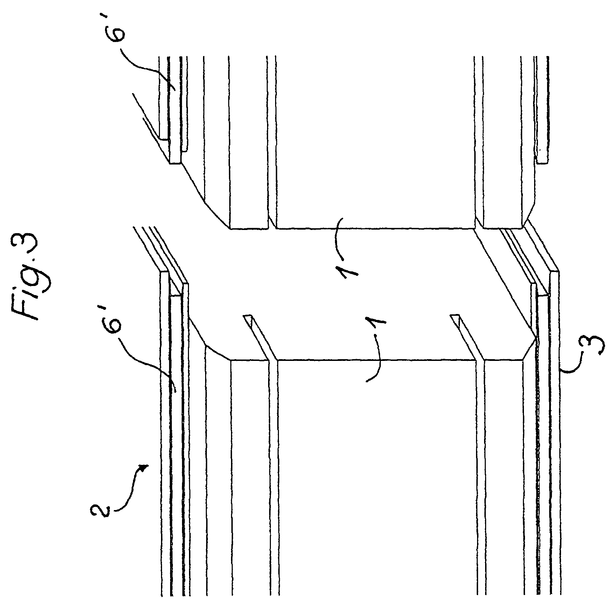

**Figur 3** zeigt die besonders vorteilhafte Variante der vorliegenden Erfindung, bei welcher auch die Kanten 6' der Auflagen 2, 3 als Nut-Federverbindung ausgebildet sind. Bei Verkleben der Überstände des Kernes 1 mit den überkragenden Auflageteilen ist die untere Phase des Verbundes in der Lage auch die Zugkräfte aufzunehmen, so daß ein besonders stabiler freitragender Verbund entsteht. Gleichzeitig erleichtert die erfindungsgemäße Lösung auch das Zusammenfügen der vorliegenden Variante, da hierbei die Nut und die Federn der Holzteile beim Zusammenschieben exakt zueinander ausgerichtet werden, wobei dies natürlich auch diese Teile vor Verletzungen durch unsachgemäße Handhabung schützt.

### Bezugszeichenliste

- 1, 1': Kern
- 2, 3: Holzauflagen
- 4: Überstände
- 5: Rücksprünge
- 6, 6': Kanten
- 7: Abschrägungen
- 8: Einschnitte
- 9: Stirnflächen
- 10: Kontaktflächen

## Patentansprüche

1. Mehrschichtdämmelement mit rechteckigem Grundriß, bestehend aus einem Kern (1) aus Hartschaumkunststoff sowie mit diesem verbundenen oberen und unteren (2, 3) rechteckigen Holzauflagen, **gekennzeichnet durch** die folgenden Merkmale
a) der Kern weist gegenüber den Holzauflagen (2, 3) je zwei aneinanderstoßende Überstände (4) und zwei aneinanderstoßende Rücksprünge (5) auf;
b) die Überstände (4) des Kerns (1) besitzen obere und untere, parallel zu den Stirnflächen der Holzauflagen (2, 3) verlaufende Abschrägungen (7), an die sich zu den Holzauflagen hin ebene Kontaktflächen (10) anschließen;
c) die Überstände (4) weisen zwischen den Abschrägungen (9) mindestens einen im wesentlichen parallel zu den Abschrägungen (7) verlaufenden Einschnitt auf.

2. Mehrschichtdämmelement nach Anspruch 1, **dadurch gekennzeichnet, daß** der Kern (1) je zwei Einschnitte (8) aufweist, die zu den Abschrägungen (7) hin versetzt sind.

3. Mehrschichtdämmelement nach Anspruch 1 oder 2, **dadurch gekennzeichnet, daß** die Platten (3) als Nut- und Federbretter ausgebildet sind.

4. Mehrschichtdämmelement nach einem oder mehreren der Ansprüche 1 bis 3, **dadurch gekennzeichnet, daß** die Einschnittiefe mindestens so groß ist, wie der Überstand des Kerns (1) über die Auflagen (2, 3).

5. Mehrschichtdämmelement nach einem oder mehreren der Ansprüche 1 bis 4, **dadurch gekennzeichnet, daß** die an die Einschnitte (8) anstoßende Stirnflächen (9) etwa 10 mm breit sind, daß die Abschrägungen (7) unter einem Winkel von etwa 45° anschließen.

6. Mehrschichtdämmelemente nach einem oder mehreren der Ansprüche 1 bis 5, **dadurch gekennzeichnet, daß** die Überstände des Kerns (1) über die Auflagen (2, 3) etwa 20 mm und die Schlitztiefe etwa 30 mm betragen.

7. Mehrschichtdämmelement nach einem oder mehreren der Ansprüche 1 bis 6, **dadurch gekennzeichnet, daß** die Holzauflagen (2, 3) mit dem Kern (1) mit Hilfe eines diffusionsoffenen Klebers verklebt sind.

8. Mehrschichtdämmelement nach einem oder mehreren der Ansprüche 1 bis 8, **dadurch gekennzeichnet, daß** die Holzauflagen (2, 3) Faserplatten, insbesondere MDF-Platten sind und daß der Kern (1) aus Polystyrol besteht.

## Claims

1. Multilayer insulating element with rectangular cross-section consisting of a core (1) of hard foamed synthetic material as well as upper and lower (2,3) rectangular wooden coverings connected with these, **characterised by** the following features
a) with regard to the wooden coverings (2, 3), the core has two abutting projections (4) and two abutting setoffs (5);
b) the projections (4) of the core possess upper and lower bevellings (7) running parallel to the end faces of the wooden coverings (2, 3) on which flat contact surfaces (10) connect towards the wooden coverings;
c) the projections (4) have, between the bevellings (9), at least one recess running substantially parallel to the bevellings (7).

2. Multilayer insulating element according to claim 1, **characterised in that** the core (1) has two recesses (8) which are displaced towards the bevellings (7)

3. Multilayer insulating element according to claim 1 or 2, **characterised in that** the plates (3) are formed as tongue and groove panels.

4. Multilayer insulating element according to one or more of claims 1 to 3, **characterised in that** the recess depth is at least as large as the projection of the core (1) over the coverings (2, 3).

5. Multilayer insulating element according to one or more of claims 1 to 4, **characterised in that** the end faces (9) abutting on the recesses (8) are about 10 mm wide, that the bevellings (7) join at an angle of about 45°.

6. Multilayer insulating element according to one or more of claims 1 to 5, **characterised in that** the projections of the core (11) over the coverings (2, 3) amount to about 20 mm and the slot depth to about 30 mm.

7. Multilayer insulating element according to one or more of claims 1 to 6, **characterised in that** the wooden coverings (2, 3) are stuck to the core (1) with the help of a diffusion-open adhesive.

8. Multilayer insulating element according to one or more of claims 1 to 7, **characterised in that** the wooden coverings (2, 3) are fibre plates, especially MDF plates, and that the core (1) consists of polystyrene.

## Revendications

1. Elément isolant stratifié au pourtour rectangulaire, comprenant un noyau (1) en mousse rigide ainsi que des supports en bois rectangulaires supérieurs et inférieurs (2, 3) raccordé à ce noyau, **caractérisé par** les caractéristiques suivantes :
a) le noyau présente, en face des supports en bois (2, 3), respectivement deux saillies (4) adjacentes l'une à l'autre et deux décrochements (5) adjacents l'un à l'autre ;
b) les saillies (4) du noyau (1) possèdent des inclinaisons (7) supérieures et inférieures s'étendant parallèlement aux surfaces frontales des supports en bois (2, 3), sur lesquelles inclinaisons se raccordent des surfaces de contact (10) planes en direction des supports en bois ;
c) les saillies (4) présentent entre les inclinaisons (9) au moins une entaille s'étendant essentiellement en parallèle aux inclinaisons (7).

2. Elément isolant stratifié selon la revendication 1, **caractérisé en ce que** le noyau (1) présente respectivement deux entailles (8) qui sont décalées en direction des inclinaisons (7).

3. Elément isolant stratifié selon la revendication 1 ou 2, **caractérisé en ce que** les panneaux (3) sont formées comme des planches à rainure et languette.

4. Elément isolant stratifié selon une ou plusieurs des revendications 1 à 3, **caractérisé en ce que** la profondeur des entailles est au moins aussi grande que la saillie du noyau (1) au-dessus des supports (2, 3).

5. Elément isolant stratifié selon une ou plusieurs des revendications 1 à 4, **caractérisé en ce que** les surfaces frontales (9) adjacentes aux entailles (8) ont une largeur d'environ 10 mm, **en ce que** les inclinaisons (7) se raccordent dans un angle d'environ 45°.

6. Elément isolant stratifié selon une ou plusieurs des revendications 1 à 5, **caractérisé en ce que** les saillies du noyau (1) ont environ 20 mm au-dessus des supports (2, 3) et que la profondeur des fentes est d'environ 30 mm.

7. Elément isolant stratifié selon une ou plusieurs des revendications 1 à 6, **caractérisé en ce que** les supports en bois (2, 3) sont collés avec le noyau (1) à l'aide d'une colle à diffusion ouverte.

8. Elément isolant stratifié selon une ou plusieurs des revendications 1 à 8, **caractérisé en ce que** les supports en bois (2, 3) sont des panneaux de fibres, notamment des panneaux MDF et **en ce que** le noyau (1) est en polystyrène.
